# EUROPEAN PATENT APPLICATION

(11) **EP 4 661 493 A1**
(43) Date of publication of application: **10.12.2025**
(21) Application number: 23919632.2
(22) Date of filing: 31.01.2023
(51) Int. Cl.: H04W 36/00

(54) **TERMINAL DEVICE, BASE STATION DEVICE, AND WIRELESS COMMUNICATION SYSTEM**

(71) Applicant: FUJITSU LIMITED, Kawasaki-shi, Kanagawa 211-8588 (JP)
(72) Inventor: HORI Takako, Kawasaki-shi, Kanagawa 211-8588 (JP); UEMURA Katsunari, Kawasaki-shi, Kanagawa 211-8588 (JP)
(74) Representative: Haseltine Lake Kempner LLP
(86) International application number: PCT/JP2023/002992
(87) International publication number: WO 2024/161489

(57) **Abstract**

A terminal device includes, a receptor that receives, from a base station device, a first signal including change destination information that designates first cell and second cell as cell change destination candidates, and a switcher that performs first processing of switching a serving cell from a third cell to the first cell according to information related to a cell change included in a second signal received from the base station device, and performs, in a case where the first processing fails, second processing of executing a reestablishment procedure by using a third configuration applied in the third cell, wherein in the second processing, in a case where the second cell is selected as a change destination, the switcher switches the serving cell to the second cell by using a second configuration applied in the second cell instead of the third configuration.

## Description

### TECHNICAL FIELD

The present invention relates to a terminal device, a base station device, and a wireless communication system.

### BACKGROUND ART

The current network is expanding to include a network of wireless communication using a mobile terminal (a smartphone or a feature phone) or the like. In the expansion of wireless communication, further increases in speed and capacity are being demanded.

In the 3rd Generation Partnership Project (3GPP (registered trademark), which is an international standardization project, technical study and standard formulation of a cellular mobile communication system are performed. For example, Evolved Terrestrial Radio Access (E-UTRA) is standardized as a radio access technology (RAT) for 3.9th Generation (3.9G) and 4th Generation (4G), and Evolved Packet Core (EPC) is standardized as a core network (CN) technology. In addition, new radio (NR) is standardized as a 5th Generation (5G) RAT, and 5G core (5GC) is standardized as a core network technology. In addition, the extension of these technologies is still under continuous study and standardization.

Technologies related to NR are described, for example, in the following Non-Patent Literatures 1 to 7.

### CITATION LIST

### NON-PATENT LITERATURE

Non-Patent Literature 1: 3GPP TS 38.300 V17.3.0 NR Overview Specification
Non-Patent Literature 2: 3GPP TS 38.211 V17.4.0 NR PHY Channels and Modulation Specification
Non-Patent Literature 3: 3GPP TS 38.321 V17.3.0 NR MAC Specification
Non-Patent Literature 4: 3GPP TS 38.322 V17.2.0 NR RLC Specification
Non-Patent Literature 5: 3GPP TS 38.323 V17.3.0 NR PDCP Specification
Non-Patent Literature 6: 3GPP TS 37.324 V17.0.0 NR SDAP Specification
Non-Patent Literature 7: 3GPP TS 38.331 V17.3.0 NR RRC Specification
Non-Patent Literature 8: 3GPP RP-223520 "Revised WID on Further NR mobility enhancements"
Non-Patent Literature 9: 3GPP R2-2211642 "Solutions to cell switch in LTM"
Non-Patent Literature 10: 3GPP R2-2211795 "Discussion on dynamic cell switch"

### SUMMARY OF INVENTION

### PROBLEMS TO BE SOLVED BY THE INVENTION

As one of the extension technologies, technical studies have been conducted on improving mobility. One of study items is a technology called L1/L2-triggered mobility (LTM), which aims to reduce latency in mobility by changing the serving cell of a terminal device using Layer 1 and/or Layer 2 signals (Non-Patent Literature 8).

However, specific methods of LTM have not been determined in the standardized specifications. For example, specifications regarding security measures in processing of a terminal device in a case where a cell switch by LTM fails have not been determined.

Therefore, one disclosure is to provide a base station device, a terminal device, and a wireless communication system that enable secure mobility processing.

### MEANS FOR SOLVING THE PROBLEMS

An aspect of the present invention includes, a receptor that receives, from a base station device, a first signal including change destination information that designates first cell and second cell as cell change destination candidates, and a switcher that performs first processing of switching a serving cell from a third cell to the first cell according to information related to a cell change included in a second signal received from the base station device, and performs, in a case where the first processing fails, second processing of executing a reestablishment procedure by using a third configuration applied in the third cell, wherein in the second processing, in a case where the second cell is selected as a change destination, the switcher switches the serving cell to the second cell by using a second configuration applied in the second cell instead of the third configuration.

An aspect of the present invention includes, a transmitter that transmits, to a terminal device, a first signal including change destination information that designates first cell and second cell as cell change destination candidates, and a controller that transmits a second signal including information related to a cell change, and causes the terminal device to perform first processing of switching a serving cell from a third cell to the first cell according to the information related to the cell change and to perform, in a case where the first processing fails, second processing of executing a reestablishment procedure by using a third configuration applied in the third cell, wherein in the second processing, in a case where the terminal device selects the second cell as a change destination, the controller performs control to switch the serving cell to the second cell by using a second configuration applied in the second cell instead of the third configuration.

An aspect of the present invention includes, a base station device that transmits, to a terminal device, a first signal including change destination information that designates first cell and second cell as cell change destination candidates, and a terminal device that performs first processing of switching a serving cell from a third cell to the first cell according to information related to a cell change included in a second signal received from the base station device, performs, in a case where the first processing fails, second processing of executing a reestablishment procedure by using a third configuration applied in the third cell, and switches, in the second processing, in a case where the second cell is selected as a change destination, the serving cell to the second cell by using a second configuration applied in the second cell instead of the third configuration.

### ADVANTAGEOUS EFFECTS OF THE INVENTION

According to one disclosure, secure communication is enabled when a terminal device performs mobility processing.

### BRIEF DESCRIPTION OF DRAWINGS

FIG. 1 is a diagram illustrating a configuration example of a communication system 10.
FIG. 2 is a diagram illustrating a configuration example of the base station device 200.
FIG. 3 is a diagram illustrating a configuration example of the terminal device 100.
FIG. 4 is a diagram illustrating an example of a protocol stack of U-Plane in a case where the core network 300 is 5GC.
FIG. 5 is a diagram illustrating an example of a protocol stack of C-Plane in a case where the core network 300 is 5GC.
FIG. 6 is a diagram illustrating an example of a message format of RRCReconfiguration.
FIG. 7 is a diagram illustrating an example of a configuration of a cell group of the communication system 10.
FIG. 8 is a diagram illustrating an example of reconfiguration with synchronization.
FIGS. 9A and 9B are diagrams illustrating a handover procedure by four-step random access.
FIG. 10 is a diagram illustrating an example of a sequence of LTM.
FIG. 11 is a diagram illustrating an example of a sequence of cell switching failure detection and cell switching failure processing.
FIG. 12 is a diagram illustrating an example of a first cell switching failure processing method.
FIG. 13 is a diagram illustrating an example of a second cell switching failure processing method.
FIG. 14 is a diagram illustrating an example of a third cell switching failure processing method.

### DESCRIPTION OF EMBODIMENTS

Hereinafter, the present embodiment will be described in detail with reference to the drawings. Problems and examples in the present specification are merely exemplary and do not limit the claims of the present application. In particular, the technology of the present application can be applied to even different expressions as long as the expressions are technically equivalent even if the expressions are different, and the claims are not limited.

In addition, in the present embodiment, names, processing, and the like of each device, node, function, protocol, entity, signaling, message, parameter, and the like will be described for a case where the radio access technology is E-UTRA or NR and a case where the core network is EPC or 5GC, but the embodiments may be used for other radio access technologies. The names of each node and entity in the embodiments may be different names.

### <Configuration Example of Communication System 10>

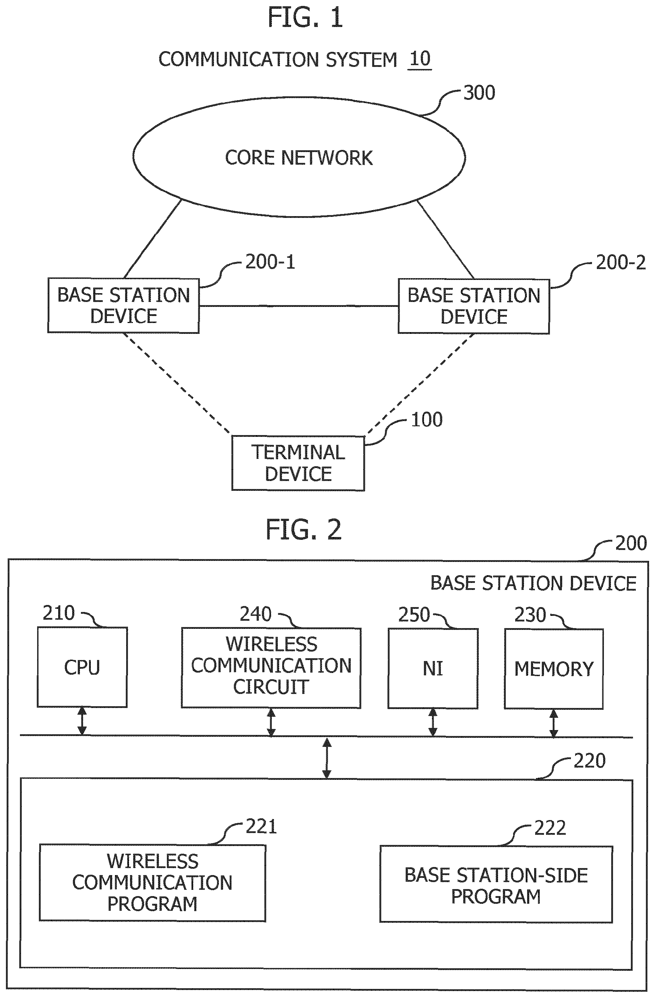

FIG. 1 is a diagram illustrating a configuration example of a communication system 10. The communication system 10 includes a terminal device 100, base station devices 200-1 and 2, and a core network 300. The communication system 10 may be a wireless communication system in which the terminal device 100 communicates with the base station device 200-1 or the base station device 200-2, or may be a wireless communication system in which the terminal device 100 communicates with the base station device 200-1 and the base station device 200-2 by Multi Radio Dual Connectivity (MR-DC) described later. In a case where communication is performed by the MR-DC, for example, the base station device 200-1 is a master base station device, and the base station device 200-2 is a secondary base station device. Hereinafter, the master base station device may be referred to as a master node (MN), and the secondary base station device may be referred to as a secondary node (SN).

The terminal device 100 is wirelessly connected to one or both of the base station device 200-1 and the base station device 200-2, and performs wireless communication. The RAT that provides the wireless connection is, for example, E-UTRA or NR. The terminal device 100 is a terminal device compatible with one or both of E-UTRA and NR.

The base station devices 200-1 and 2 (hereinafter, collectively referred to as a base station device 200 in some cases) are communication devices that are wirelessly connected to the terminal device 100 and perform wireless communication. In addition, the base station devices 200-1 and 2 are, for example, connected to each other via a wired connection and communicate with each other. The base station device 200 is, for example, connected to the core network 300 via a wired connection and performs communication. The base station device 200 is, for example, a base station device of either an eNodeB (eNB) that provides E-UTRA as RAT or a gNodeB (gNB) that provides NR as RAT.

The core network 300 is a network corresponding to a certain generation. The core network 300 is, for example, a 5GC which is a core network standardized for 5G or an EPC which is a core network standardized for 4G.

Details of the MR-DC implemented in the communication system 10 will be described later.

### <Configuration Example of Base Station Device 200>

FIG. 2 is a diagram illustrating a configuration example of the base station device 200. The base station device 200 is a communication device or a relay device including a central processing unit (CPU) 210, a storage 220, a memory 230, a wireless communication circuit 240, and a network interface 250.

The storage 220 is an auxiliary storage device such as a flash memory, a hard disk drive (HDD), or a solid state drive (SSD) that stores programs and data. The storage 220 stores a wireless communication program 221 and a base station-side program 222.

The memory 230 is an area where a program stored in the storage 220 is loaded. In addition, the memory 230 may also be used as an area where a program stores data.

The wireless communication circuit 240 is a circuit that is wirelessly connected to the terminal device 100 and performs communication. The base station device 200 receives a signal transmitted from the terminal device 100 via the wireless communication circuit 240, for example, and transmits the signal to the terminal device 100.

A network interface (NI) 250 is, for example, a communication device that is connected to another base station device 200 and realizes communication between base stations. In addition, the NI 250 is, for example, a communication device that is connected to the core network 300 (communication device constituting the core network 300) and performs communication. The NI 250 is, for example, a network interface card (NIC). The base station device 200 receives a signal from another communication device via the NI 250 and transmits the signal to the other communication device.

The CPU 210 is a processor that loads a program stored in the storage 220 into the memory 230, executes the loaded program, constructs each unit (for example, transmission unit or switching unit), and implements each processing.

The CPU 210 executes the wireless communication program 221 to perform wireless communication processing. The wireless communication processing is processing of wirelessly connecting to the terminal device 100, wirelessly communicating with the terminal device 100, and relaying communication performed by the terminal device 100 with another communication device.

The CPU 210 executes the base station-side program 222 to construct a second transmission unit, a second reception unit, and a second processing unit, and performs base station-side processing. In a case where the base station device 200 performs communication with the terminal device 100 using the MR-DC, the base station-side processing may include MR-DC master node processing and MR-DC secondary node processing. In this case, the MR-DC master node processing is processing of performing control on the master node side in the MR-DC, and the MR-DC secondary node processing is processing of performing control on the secondary node side in the MR-DC. The base station device 200 performs communication corresponding to each type of MR-DC to be described later in the MR-DC master node processing and the MR-DC secondary node processing.

### <Configuration Example of Terminal Device 100>

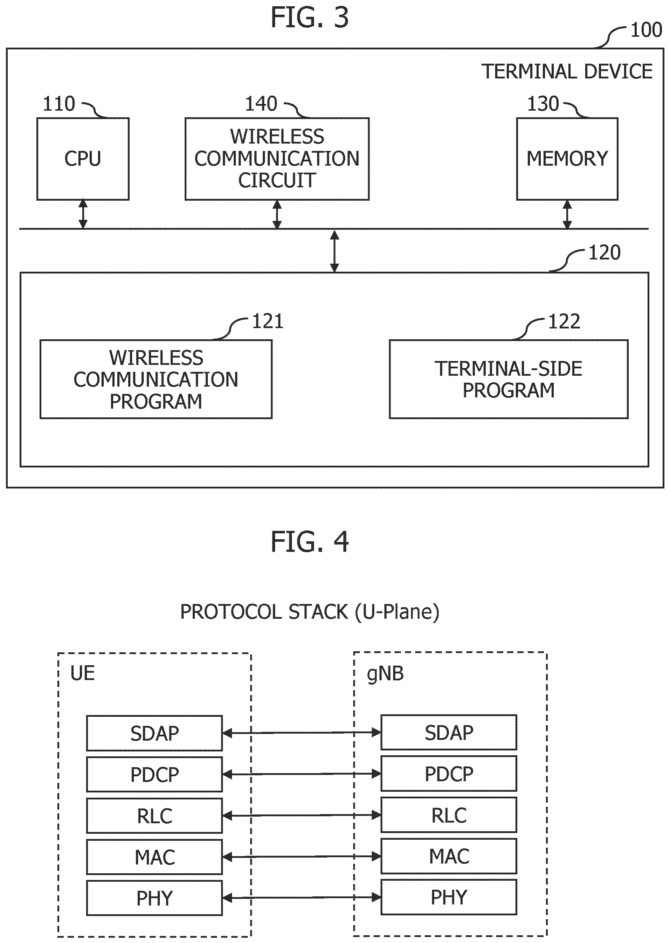

FIG. 3 is a diagram illustrating a configuration example of the terminal device 100. The terminal device 100 is a communication device including a CPU 110, a storage 120, a memory 130, and a wireless communication circuit 140.

The storage 120 is an auxiliary storage device such as a flash memory, an HDD, or an SSD that stores programs and data. The storage 120 stores a terminal-side wireless communication program 121 and a terminal-side program 122.

The memory 130 is an area where a program stored in the storage 120 is loaded. In addition, the memory 130 may also be used as an area where a program stores data.

The wireless communication circuit 140 is a circuit that is wirelessly connected to the base station device 200 and performs communication. The terminal device 100 receives a signal transmitted from the base station device 200 via the wireless communication circuit 140, for example, and transmits the signal to the base station device 200. The wireless communication circuit 140 is, for example, a network card that supports wireless connection.

The CPU 110 is a processor that loads a program stored in the storage 120 into the memory 130, executes the loaded program, constructs each unit, and implements each processing.

The CPU 110 executes the terminal-side wireless communication program 121 to perform terminal-side wireless communication processing. The terminal-side wireless communication processing is processing of wirelessly connecting to the base station device 200 and performing wireless communication with the base station device 200 or communication with another communication device via the base station device 200.

The CPU 110 executes the terminal-side program 122 to construct a reception unit and a control unit and perform terminal-side processing. In a case where the terminal device 100 performs communication with the base station device 200 using the MR-DC, the terminal-side processing may include terminal-side MR-DC processing. In this case, the terminal-side MR-DC processing is processing of controlling communication in the MR-DC. In the terminal-side MR-DC processing, the terminal device 100 performs communication corresponding to each type of MR-DC to be described later.

### <Protocol Stack>

An example of a protocol stack of the communication system 10 will be described. In the communication system 10, a protocol stack is referred to as a hierarchical structure that represents a series of protocols for performing transmission and reception of data. In the following example, a case where the base station device 200 is an eNB or a gNB, and the core network 300 is an EPC or a 5GC will be described. In addition, the terminal device 100 (user equipment (UE)) corresponds to one or both of E-UTRA and NR.

Hereinafter, a protocol stack of a user plane (U-Plane) and a control plane (C-Plane) will be described. The U-Plane is used, for example, for transmission and reception of user data in communication. The C-Plane is used, for example, for transmission and reception of a control signal (message) in communication. Note that, in each embodiment, unless specifically referred to as "user data", "control signal (message)", or the like, the data indicates one or both of the user data and the control signal (message).

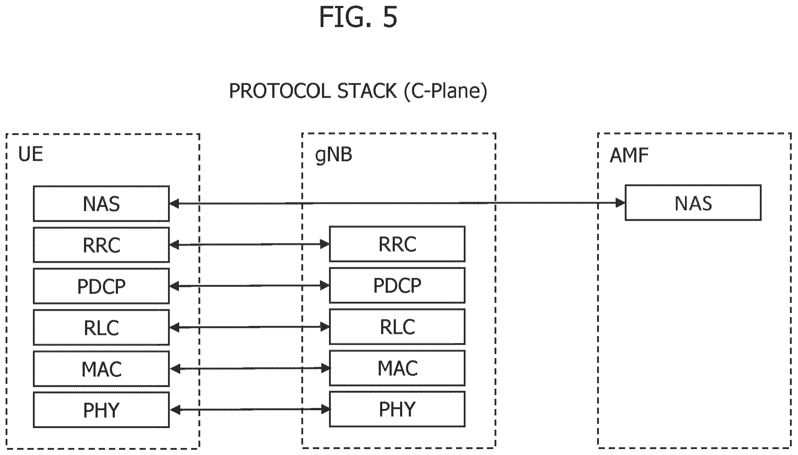

FIG. 4 is a diagram illustrating an example of a protocol stack of U-Plane in a case where the core network 300 is 5GC. In addition, FIG. 5 is a diagram illustrating an example of a protocol stack of C-Plane in a case where the core network 300 is 5GC. In FIGS. 4 and 5, each of physical (PHY), medium access control (MAC), radio link control (RLC), packet data convergence protocol (PDCP), service data adaptation protocol (SDAP), radio resource control (RRC), and non access stratum (NAS) indicates a name of a layer. Hereinafter, each of PHY, MAC, RLC, PDCP, SDAP, RRC, and NAS may be referred to as a PHY layer, a MAC layer, an RLC layer, a PDCP layer, an SDAP layer, an RRC layer, or a NAS layer. In addition, each of MAC, RLC, PDCP, and SDAP may be referred to as a MAC sublayer, an RLC sublayer, a PDCP sublayer, and an SDAP sublayer. In addition, each of MAC, RLC, PDCP, and SDAP may be referred to as a MAC entity, an RLC entity, a PDCP entity, or an SDAP entity. Note that the protocol stack of the U-Plane in a case where the core network 300 is the EPC is a protocol stack in which the SDAP in FIG. 4 is not present. That is, the protocol stack in such a case is a protocol stack including PHY, MAC, RLC, and PDCP. In addition, in the protocol stack of the C-Plane in a case where the core network 300 is the EPC, the NAS is present in the Mobility Management Entity (MME), whereas in FIG. 5, the NAS is present in the Access and Mobility Management Function (AMF).

The function in each layer may be common or different depending on whether the RAT is E-UTRA or NR. In the following description, in a case where there is no designation of E-UTRA or NR, the functions are common to E-UTRA and NR.

Note that in each sublayer, data provided from an upper layer and data provided to an upper layer are referred to as a Service Data Unit (SDU). That is, data provided from the upper layer to the MAC, the RLC, the PDCP, and the SDAP, and data provided from the MAC, the RLC, the PDCP, and the SDAP to the upper layer are referred to as a MAC SDU, an RLC SDU, a PDCP SDU, and an SDAP SDU, respectively.

In addition, in each sublayer, data provided to a lower layer and data provided from a lower layer are referred to as a Protocol Data Unit (PDU). That is, data provided from the MAC, the RLC, the PDCP, and the SDAP to the lower layer, and data provided from the lower layer to the MAC, the RLC, the PDCP, and the SDAP are referred to as a MAC PDU, an RLC PDU, a PDCP PDU, and an SDAP PDU, respectively. In addition, a PDU for control is present in the RLC, the PDCP, and the SDAP, and may be referred to as a control PDU. In addition, in order to distinguish from the control PDU, other PDUs may be referred to as data PDUs.

In FIG. 4, the U-Plane includes the PHY, the MAC, the RLC, the PDCP, and the SDAP, and is terminated at the terminal device 100 (UE) and the base station device 200 (gNB).

An example of the function of the PHY will be described. The PHY is a radio physical layer, and transfers control information and data between the terminal device 100 and the base station device 200 using physical channels. A direction from the base station device 200 to the terminal device 100 may be referred to as downlink (DL), and a direction from the terminal device 100 to the base station device 200 may be referred to as uplink (UL). In addition, in the terminal device 100 and the base station device 200, the PHY is connected to the MAC which is an upper layer through a transport channel, and data is moved between the PHY and the MAC through the transport channel. In the PHY, a radio network temporary identifier (RNTI) is used to identify various kinds of control information.

An example of the function of the MAC will be described. The MAC is a medium access control layer, and performs mapping between a transport channel and a logical channel (LCH), multiplexing and demultiplexing of the MAC SDU, a scheduling report (SR), error correction through hybrid automatic repeat request (HARQ), priority control, and the like. In the terminal device 100 and the base station device 200, the MAC is connected to the RLC which is an upper layer through a logical channel, and data is moved between the MAC and the RLC through the logical channel. The logical channel may be identified by a logical channel identifier (LCID). In addition, the base station device 200 controls the terminal device 100 using a MAC control element (CE). In addition, the terminal device 100 performs a report or the like to the base station device 200 using the MAC CE.

The RLC is a radio link control layer, and there are three modes of a transparent mode (TM), an unacknowledged mode (UM), and an acknowledged mode (AM). The RLC performs transfer of the PDU, assignment of a sequence number (in the case of UM and AM), division of the SDU (in the case of UM and AM), and re-division (in the case of AM) on the transmission side, reassembly of the SDU (in the case of UM and AM), duplicate detection (in the case of AM), and discard of the SDU (in the case of UM and AM) on the reception side, and performs RLC reestablishment and the like on the transmission side and the reception side. The divided SDU is referred to as an SDU segment. In addition, the RLC has a retransmission function and/or an automatic repeat request function (ARQ) of data (in the case of AM). Note that, in the case of E-UTRA RLC, additional functions include data concatenation on the transmission side, and reordering and in-order delivery functions on the reception side.

The PDCP is a packet data convergence protocol layer, and performs data transfer of U-Plane and C-Plane, PDCP sequence number management, header compression and decompression, encryption and decryption, integrity protection and integrity verification, timer-based SDU discard, routing to split bearers, reordering, in-order delivery, and the like. Note that, in the E-UTRA PDCP, functions such as timer-based SDU discard, reordering, and in-order delivery may be limited to the case of the split bearer to be described later.

The SDAP is a service data adaptation protocol layer, and performs mapping between a quality of service (QoS) flow and a data radio bearer (DRB) to be described later, marking a QoS flow identifier (QFI) to a downlink (DL) packet and an uplink (UL) packet, and the like.

Examples of the upper layer of the U-Plane include layers such as Internet Protocol (IP), Transmission Control Protocol (TCP), User Datagram Protocol (UDP), Ethernet (registered trademark), and an application. The layer including IP, TCP, UDP, Ethernet, and the like may be referred to as a PDU layer. In addition, an IP Multimedia Subsystem (IMS) that performs session control may be included in the application layer.

In FIG. 5, the C-Plane of an Access Stratum (AS) includes the PHY, the MAC, the RLC, the PDCP, and the RRC, and is terminated at the terminal device 100 and the base station device 200. In addition, the C-Plane of NAS includes NAS, and is terminated between the terminal device 100 and the AMF that is a device of the core network 300. The PHY, MAC, RLC, and PDCP are similar to those of the U-Plane.

The RRC performs broadcasting of system information related to the AS and NAS; paging; establishment, maintenance, and release of RRC connections between the terminal device 100 and the base station device 200; addition, modification, and release of carrier aggregation (CA); addition, modification, and release of dual connectivity (DC); security functions including management of security keys; establishment, configuration, maintenance, and release of signaling radio bearers (SRB) and data radio bearers (DRB); mobility functions; QoS management functions; control of measurement reports and reporting by the terminal device; detection and recovery from radio link failure (RLF); and transfer of NAS messages.

The NAS performs authentication, mobility management, security control, and the like on the core network side.

### <Channel>

The channel used in the communication system 10 will be described. Hereinafter, an example of a channel corresponding to NR will be described, but the channel to be used is not limited to the following. In addition, channels having the same name can be used in the same or similar applications in the RAT other than the NR, for example, E-UTRA.

### <1. Physical Channel>

A physical broadcast channel (PBCH) is a channel used for transmitting broadcast information from the base station device 200 to the terminal device 100.

A physical downlink control channel (PDCCH) is a channel used for transmitting downlink control information (DCI) and the like from the base station device 200 to the terminal device 100.

A physical downlink shared channel (PDSCH) is a channel used for transmitting data and the like from an upper layer, from the base station device 200 to the terminal device 100.

A physical uplink control channel (PUCCH) is a channel used for transmitting uplink control information (UCI) and the like from the terminal device 100 to the base station device 200.

A physical uplink shared channel (PUSCH) is a channel used for transmitting data and the like from an upper layer, from the terminal device 100 to the base station device 200.

A physical random access channel (PRACH) is a channel used for transmitting a random access preamble and the like from the terminal device 100 to the base station device 200.

### <2. Transport Channel>

A broadcast channel (BCH) is mapped to a PBCH which is a physical channel.

A downlink shared channel (DL-SCH) is mapped to a PDSCH which is a physical channel.

A paging channel (PCH) is mapped to a PDSCH which is a physical channel.

A uplink shared channel (UL-SCH) is mapped to the PUSCH which is a physical channel.

A random access channel (RACH) is mapped to a PRACH that is a physical channel.

### <3. Logical Channel>

A broadcast control channel (BCCH) is a downlink channel for broadcasting system information, and is mapped to a BCH or a DL-SCH of a transport channel.

A paging control channel (PCCH) is a downlink channel for carrying a paging message, and is mapped to a PCH of a transport channel.

A common control channel (CCCH) is a channel for transmitting control information (RRC message and the like) between the terminal device 100 and the base station device 200, and is a channel used for the terminal device 100 that does not maintain (does not have) the RRC connection with the base station device 200, the downlink is mapped to the DL-SCH of the transport channel, and the uplink is mapped to the UL-SCH of the transport channel.

A dedicated control channel (DCCH) is a point-to-point bidirectional channel that transmits dedicated control information (RRC message and the like) between the terminal device 100 and the base station device 200, and is used for the terminal device 100 having the RRC connection with the base station device 200, the downlink is mapped to the DL-SCH of the transport channel, and the uplink is mapped to the UL-SCH of the transport channel.

A dedicated transport channel (DTCH) a point-to-point terminal-dedicated bidirectional channel that transmits user information (user data), the downlink is mapped to the DL-SCH of the transport channel, and the uplink is mapped to the UL-SCH of the transport channel.

An MBS control channel (MCCH) is a point-to-multipoint downlink channel, and is used to transmit multicast broadcast service (MBS) broadcasting control information corresponding to one or a plurality of MBS traffic channels (MTCH) from the base station device 200 to the terminal device 100. The MBS control channel is mapped to the DL-SCH of the transport channel.

The MTCH is a point-to-multipoint downlink channel and is used to transmit data of a multicast session or data of a broadcast session of the MBS from the base station device 200 to the terminal device 100. The MTCH is mapped to the DL-SCH of the transport channel.

### <RRC State (Mode)>

The RRC state of the terminal device 100 is a state related to the RRC connection of the terminal device 100. A state in which the RRC connection with the base station device 200 is not established is referred to as an RRC idle mode (RRC_IDLE). A state in which the RRC connection with the base station device 200 is established is referred to as an RRC connection mode (RRC_CONNECTED). A state in which the RRC connection with the base station device 200 is temporarily stopped (suspended) is referred to as an RRC inactive mode (RRC_INACTIVE). Note that in a case where the core network 300 is the EPC, a state in which the RRC connection with the base station device 200 is temporarily stopped is not referred to as the RRC inactive mode, and may be referred to as another name such as RRC suspension.

### <RRC Message>

The RRC message will be described. The RRC message is a message including information necessary for performing communication in a cell, and includes a Master Information Block (MIB), a group of System Information Blocks (SIBs), and the like. The parameter included in the RRC message may be referred to as a field or an information element (IE).

In addition, the RRC message includes a message related to establishment of the RRC connection. Examples of the message related to the establishment of the RRC connection include an RRC setup request message (RRCSetupRequest), an RRC setup message (RRCSetup), and an RRC setup complete message (RRCSetupComplete) in the case of NR. In addition, examples of the message related to the establishment of the RRC connection include an RRC connection setup request message (RRCConnectionSetupRequest), an RRC connection setup message (RRCConnectionSetup), and an RRC connection setup complete message (RRCConnectionSetupComplete) in the case of E-UTRA.

In addition, the RRC message includes a message related to initial activation of access stratum (AS) security. Examples of the message related to the initial activation of the AS security include a security mode command message (SecurityModeCommand).

In addition, the RRC message includes a message related to reconfiguration of the RRC connection. Examples of the message related to the reconfiguration of the RRC connection include an RRC reconfiguration message (RRCReconfiguration) and an RRC reconfiguration complete message (RRCReconfigurationComplete) in the case of NR. In addition, examples of the message related to the reconfiguration of the RRC connection include an RRC connection reconfiguration message (RRCConnectionReconfiguration) and an RRC connection reconfiguration complete message (RRCConnectionReconfigurationComplete) in the case of E-UTRA. Note that the message related to the reconfiguration of the RRC connection performs establishment, configuration, modification, and release of a radio bearer, a cell group, and the like to be described later, and reconfiguration with synchronization, and also performs establishment, configuration, modification, and release of measurement information and the like.

In addition, the RRC message includes a message related to reestablishment of the RRC connection. Examples of the message related to the reestablishment of the RRC connection include an RRC reestablishment request message (RRCReestablishRequest), an RRC reestablishment message (RRCReestablish), an RRC reestablishment complete message (RRCReestablishComplete), and the like in the case of NR. In addition, examples of the message related to the establishment of the RRC connection include an RRC connection reestablishment request message (RRCConnectionReestablishRequest), an RRC connection reestablishment message (RRCConnectionReestablish), an RRC connection reestablishment complete message (RRCConnectionReestablishComplete), and the like in the case of E-UTRA.

In addition, the RRC message further includes a message related to release or suspension of the RRC connection, a message related to resumption of the RRC connection, a message related to capability of the terminal device, a message related to terminal information, a message related to MCG failure information or SCG failure information, and the like.

Note that, in the MR-DC, in a case where the master node is the eNB, the eNB may include, as a container in the RRC message of E-UTRA, RRC messages or parameters of NR received from the gNB that is a secondary node, perform transmission to the terminal device 100, and allow configuration related to the NR to be performed in the terminal device 100. In addition, the terminal device 100 may include, as a container in the RRC message of E-UTRA, a complete message for the configuration related to the NR, and perform transmission to the eNB that is the master node.

In addition, in the MR-DC, in a case where the master node is the gNB, the gNB may include, as a container in the RRC message of NR, the RRC messages and parameters of E-UTRA received from the eNB that is a secondary node, perform transmission to the terminal device 100, and allow configuration related to the E-UTRA to be performed in the terminal device 100. In addition, the terminal device 100 may include, as a container in the RRC message of NR, a complete message for the configuration related to the E-UTRA, and perform transmission to the gNB that is the master node.

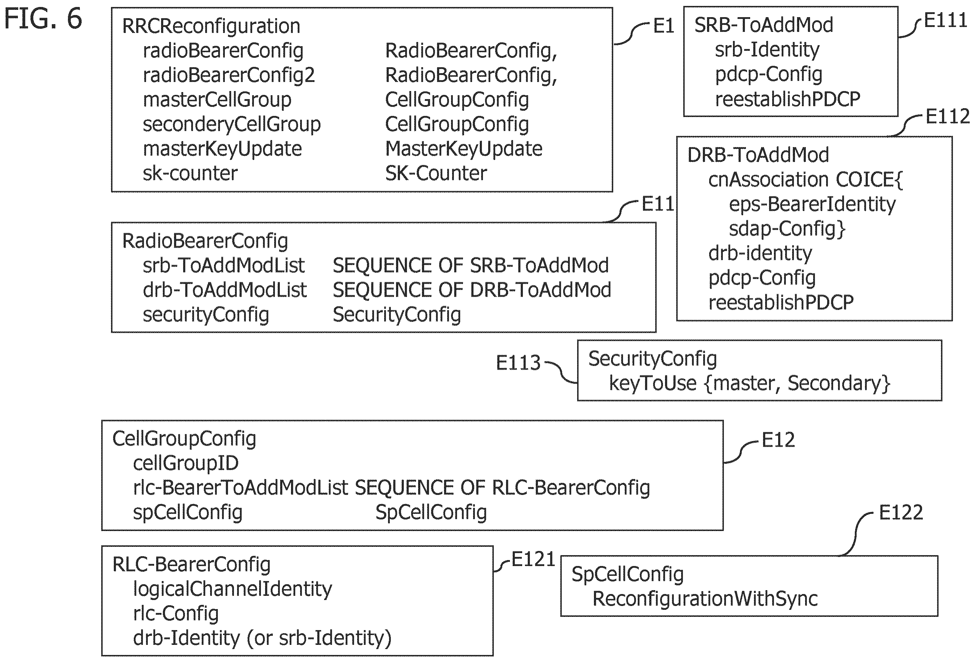

FIG. 6 is a diagram illustrating an example of a message format of RRCReconfiguration. Format E1 is a parameter of RRC Reconfiguration.

RRC Reconfiguration has radioBearerConfig, radioBearerConfig2, masterCellGroup, seconderyCellGroup, masterKeyUpdate, and sk-counter as parameters.

The radioBearerConfig and the radioBearerConfig2 are configurations related to the MN terminated bearer or the SN terminated bearer, and include an SRB configuration, a DRB configuration, a security configuration, and the like. The SRB configuration (DRB configuration) includes an SRB identifier (DRB identifier), a PDCP configuration, a parameter indicating PDCP reestablishment, and the like. The security configuration includes a parameter (keyToUse) indicating whether to use the master key or the secondary key.

The masterCellGroup and the seconderyCellGroup are respectively an MCG configuration and an SCG configuration, and include a cell group identifier, an RLC bearer configuration, a SpCell configuration, and the like. The RLC bearer configuration includes a logical channel identifier, an RLC configuration, a radio bearer identifier (SRB identifier or DRB identifier) with which the RLC bearer is associated, and the like. The SpCell configuration includes information necessary for reconfiguration with synchronization, and the like.

The masterKeyUpdate includes information necessary for updating the master key.

The sk-counter includes information necessary for generating the secondary key.

Format E11 is a diagram illustrating an example of parameters of RadioBearerConfig included in RRCReconfiguration.

Format E12 is a diagram illustrating an example of parameters of CellGroupConfig included in RRCReconfiguration.

Format E111 is a diagram illustrating an example of parameters of SRB-ToAddMod included in RadioBearerConfig.

Format E112 is a diagram illustrating an example of parameters of DRB-ToAddMod included in RadioBearerConfig.

Format E113 is a diagram illustrating an example of parameters of SecurityConig included in RadioBearerConfig.

Format E121 is a diagram illustrating an example of parameters of RLC-BearerConfig included in CellGroupConfig.

Format E122 is a diagram illustrating an example of parameters of SpCellConfig included in CellGroupConfig.

### <Radio Bearer>

An example of the radio bearer of the communication system 10 will be described.

### <1. Signaling Radio Bearer>

A signaling radio bearer (SRB) is a radio bearer for transmitting the RRC message or the NAS message.

The SRB0 is a radio bearer for the RRC message using the CCCH logical channel.

The SRB1 is a radio bearer for the RRC message and the NAS message using the DCCH logical channel, and is established before the SRB2 described later is established.

The SRB2 is a radio bearer for the NAS message and the RRC message including measurement information in which a history is recorded (logged), and uses the DCCH logical channel. The priority of SRB2 is lower than that of SRB1, and SRB2 may be configured by the base station device 200 after AS security is activated.

The SRB3 is a radio bearer for the RRC message in a case where EN-DC, NGEN-DC, or NR-DC is configured in the terminal device 100, and uses the DCCH logical channel. Note that EN-DC, NGEN-DC, and NR-DC are types of MR-DC, and details of the types of MR-DC will be described later.

### <2. Data Radio Bearer>

A data radio bearer (DRB) is a radio bearer for transmitting user data.

### <Protocol Configuration of SRB and DRB>

A protocol configuration of the SRB and the DRB of the terminal device 100 will be described.

A PDCP entity is not present in the SRBO, and the SRB0 is configured by an RLC bearer. The RLC bearer includes the RLC entity and the MAC logical channel. A mode of the RLC entity of the SRB0 is TM.

Each of the SRB1 and the SRB2 includes one PDCP entity and one or a plurality of RLC bearers. A mode of the RCL entity is AM.

The SRB3 includes one PDCP entity and one RLC bearer. A mode of the RLC entity is AM.

The DRB includes one PDCP entity and one or a plurality of RLC bearers. A mode of the RLC entity is UM or AM. The DRB may be referred to as a UM DRB in a case where the RLC entity is UM, and may be referred to as an AM DRB in a case where the RLC entity is AM. In addition, the DRB is associated with one SDAP in a case where the core network 300 is 5GC, and is associated with one EPS bearer (or EPS bearer identifier (EPS bearer identifier)) in a case where the core network 300 is EPC.

Note that one MAC entity is assumed to be present for each cell group, which will be described later.

### <Cell and Cell Group>

A cell and a cell group (CG) configured in the terminal device 100 will be described.

The cell group may include one special cell (SpCell). In addition, the cell group may include one SpCell and one or a plurality of secondary cells (SCells). Note that the SpCell in a master cell group (MCG) to be described later may be referred to as a primary cell (PCell). In addition, the SpCell in a secondary cell group (SCG) to be described later may be referred to as a primary SCG cell (PSCell).

The PCell is a cell on a primary frequency, and is used to establish the RRC connection or re-establish the RRC connection. That is, when the RRC connection is established or the RRC connection is re-established, the cell selected by the terminal device 100 serves as the PCell. In addition, when the base station device 200 requests a handover, which will be described later, to the terminal device 100, a new PCell designated by the base station device 200 is used for random access.

The SCell is a cell that provides additional radio resources in addition to the SpCell in a case where carrier aggregation (CA) is configured in the terminal device 100.

The PSCell is a cell on a primary frequency of the SCG side. The PSCell is designated by the base station device 200, and is used for random access when the PSCell is added or changed within the SCG.

Note that a cell used by the terminal device 100 in the RRC connection state for communication with the base station device 200 may be referred to as a serving cell. In a case where CA is not configured, the SpCell serves as the serving cell, and in a case where CA is configured, the SpCell and the SCell serve as the serving cells.

The MCG is a CG in a case where the dual connectivity (DC) is not configured in the terminal device 100 or is a CG belonging to a master node (MN) in a case where the DC is configured in the terminal device 100. The DC is a technology in which the terminal device 100 is wirelessly connected to the base station device 200 as the master node and the base station device 200 as the secondary node (SN), and performs wireless communication using carriers (cell groups) of the respective base station devices 200.

The SCG is a CG belonging to the secondary node configured in addition to the MCG in a case where the DC is configured in the terminal device 100.

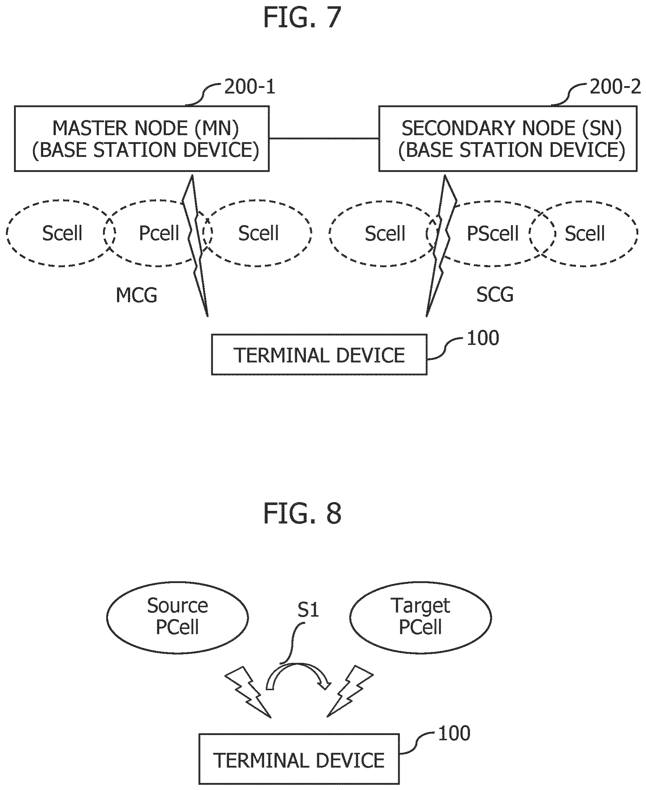

FIG. 7 is a diagram illustrating an example of a configuration of a cell group of the communication system 10. In FIG. 7, the master node (MN) is the base station device 200-1, and the secondary node (SN) is the base station device 200-2. The master node is the base station device 200 that provides the C-Plane connection to the core network 300 in the DC. The secondary node is the base station device 200 that does not provide the C-Plane to the core network 300 and provides additional radio resources to the terminal device 100 in the MR-DC. In FIG. 7, the MCG includes one PCell and two SCells. In addition, in FIG. 7, the SCG includes one PSCell and two SCells.

Note that the base station device 200 may configure a Bandwidth Part (BWP) in a cell to be configured in the terminal device 100, and may adjust the cell to use a limited frequency bandwidth within the entire frequency band of the cell. The BWP may be configured from a partial frequency bandwidth of the frequency band of each cell. In addition, a plurality of (for example, up to four) BWPs may be configured in each cell. The BWP may be configured by the RRC reconfiguration message. In each cell, the BWP to be used may be designated or switched by the RRC reconfiguration message or by using the DCI.

### <Reconfiguration with Synchronization>

The reconfiguration with synchronization will be described. The reconfiguration with synchronization (Reconfiguration With Sync) indicates a procedure executed in the terminal device 100 by including, in the RRC reconfiguration message (RRCReconfiguration) transmitted from the base station device 200 to the terminal device 100, a parameter (reconfigurationWithSync: hereinafter sometimes referred to as a reconfiguration-with-synchronization parameter) indicating that reconfiguration with synchronization is to be performed.

The reconfiguration-with-synchronization parameter is separately included under a parameter (hereinafter, sometimes referred to as an MCG configuration parameter) for MCG configuration and under a parameter (hereinafter, sometimes referred to as an SCG configuration parameter) for SCG configuration. That is, the reconfiguration with synchronization means the reconfiguration with synchronization of the MCG in a case where the parameter is included under the MCG configuration parameter, and the reconfiguration with synchronization of the SCG in a case where the parameter is included under the SCG configuration parameter.

The reconfiguration with synchronization is a procedure in which the terminal device 100 changes the SpCell, and includes operations such as random access to a new (change destination, target) SpCell, MAC reset, and PDCP data recovery (in the case of AM DRB).

Processing in a case where the reconfiguration-with-synchronization parameter is included under the MCG configuration parameter may be referred to as a handover. In addition, processing in a case where the reconfiguration-with-synchronization parameter is included under the SCG configuration parameter may be referred to as PSCell addition and/or PSCell change. In addition, the PCell/PSCell before the change may be referred to as a source PCell/source PSCell, and the PCell/PSCell after the change may be referred to as a target PCell/target PSCell. In addition, since the reconfiguration with synchronization may involve CA, the term "serving cell" may be used to refer to a source serving cell and a target serving cell. In addition, a source cell and a target cell may be referred to by omitting the term "serving".

In addition, the reconfiguration with synchronization may involve changing the security key. In this case, in addition to the above, PDCP reestablishment is performed.

When the security key is changed, a new key is generated by the RRC of the terminal device 100, and the PDCP is re-established, so that the new key is applied to the PDCP.

FIG. 8 is a diagram illustrating an example of processing in a case where the reconfiguration-with-synchronization parameter is included under the parameter for configuring the MCG. The reconfiguration-with-synchronization parameter includes settings such as configuration of the target PCell, a new Cell Radio Network Temporary Identifier (C-RNTI), RACH configuration, and a timer for detecting handover failure. The terminal device 100 performs random access (RA) in the target PCell according to the configuration, and changes the current source PCell to the target PCell (S1).

### < Random Access during Handover >

The random access during the handover includes Contention Free Random Access (CFRA), which is a type of random access without contention, and contention-based random access. There is Contention-Based Random Access (CBRA), and the random access may be performed in a four-step procedure or performed in a two-step procedure.

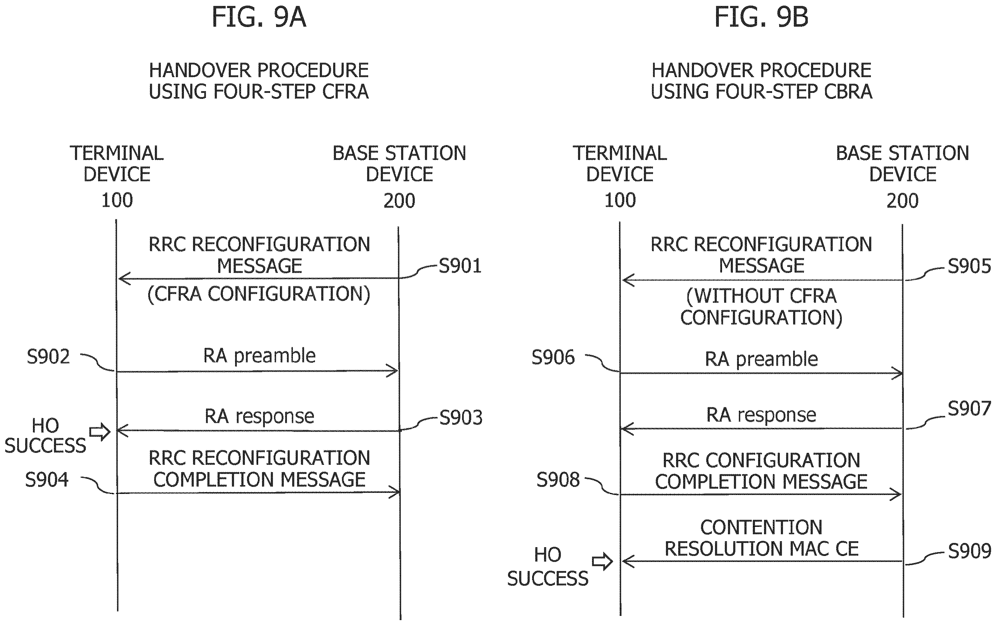

FIG. 9 is a diagram illustrating a handover procedure by four-step random access. FIG. 9A illustrates a handover procedure by four-step CFRA, and FIG. 9B illustrates a handover procedure by four-step CBRA.

The sequence of FIG. 9A will be described.

The base station device 200 transmits the RRC reconfiguration message including the reconfiguration-with-synchronization parameter to the terminal device 100 (S901).

In a case where the reconfiguration-with-synchronization parameter includes the four-step CFRA configuration and a reference signal of which Reference Signal Received Power (RSRP) is equal to or greater than a threshold value is present among the reference signals designated in the four-step CFRA configuration, the terminal device 100 executes the handover using the four-step CFRA. In addition, in a case where the reconfiguration-with-synchronization parameter includes the two-step CFRA configuration and a reference signal of which the RSRP is equal to or greater than a threshold value is present among the reference signals designated in the two-step CFRA configuration, the terminal device 100 executes the handover using the two-step CFRA. Furthermore, in a case where the reconfiguration-with-synchronization parameter does not include the four-step CFRA configuration and the two-step CFRA configuration, or in a case where the reconfiguration-with-synchronization parameter includes the four-step CFRA configuration or the two-step CFRA configuration but a reference signal of which the RSRP is equal to or greater than a threshold value is not present among the reference signals designated in the four-step CFRA configuration or two-step CFRA configuration, the terminal device 100 executes the 4-step CBRA or 2-step CBRA.

The terminal device 100 transmits the random access preamble (RA preamble) to the base station device 200 on the target PCell (S902).

When the random access preamble is received (S902), the base station device 200 transmits a random access response (RA response) (S903).

In the case of CFRA, the preamble is included in the CFRA configuration, and therefore, contention resolution does not have to be performed. Therefore, the handover is successful at the time when the terminal device 100 receives the random access response on the target PCell.

When the random access response is received (S903), the terminal device 100 transmits, to the base station device 200 onA the target serving cell, the RRC reconfiguration complete message, which is a response message to the RRC reconfiguration message (S904).

Next, the sequence of FIG. 9B will be described.

The base station device 200 transmits the RRC reconfiguration message including the reconfiguration-with-synchronization parameter to the terminal device 100 (S905). Since the reconfiguration-with-synchronization parameter does not include the CFRA configuration, the terminal device 100 executes the handover (two steps or four steps) using the CBRA.

The terminal device 100 transmits the random access preamble to the base station device 200 on the target PCell (S906).

When the random access preamble is received (S906), the base station device 200 transmits a random access response (S907).

In the case of the CBRA, since an arbitrary random access preamble is used, there is a possibility of contention with the random access preamble transmitted by another terminal device. Therefore, the handover is not yet considered to be successful at the time when the terminal device 100 receives the random access response (S907).

When the random access response is received (S907), the terminal device 100 transmits the RRC reconfiguration complete message to the base station device 200 on the target serving cell (S908).

When the RRC reconfiguration complete message is received (S907), the base station device 200 transmits the MAC CE indicating the contention resolution to the terminal device 100 on the target serving cell (S908).

In the case of the CBRA, the handover is successful at the time when the terminal device 100 receives the MAC CE indicating the contention resolution (S908).

That is, in the handover using the four-step CFRA, the transmission of the RRC reconfiguration completion message (S904) is after the handover is successful, but in the handover using the four-step CBRA, the transmission of the RRC reconfiguration complete message (S908) is before the handover is successful.

In addition, in a case where the uplink resource allocated in step S907 is sufficiently large, the terminal device 100 may transmit, in step S908, not only the RRC reconfiguration complete message but also uplink data generated on the DRB. That is, in the handover using the four-step CBRA, there is a possibility that the uplink data generated on the DRB is transmitted before the handover is successful.

Note that in the case of the handover using the two-step random access, in both the CBRA and the CFRA, the terminal device 100 transmits the RRC reconfiguration complete message in step S904 after transmitting the random access preamble in step S902 and before receiving the random access response in step S903. That is, in the handover using the two-step random access, in either of the CFRA or the CBRA, since the transmission of the RRC configuration complete message is before the handover is successful, there is a possibility that the uplink data generated on the DRB is transmitted before the handover is successful.

In addition, in E-UTRA, the RACH-less handover as the handover that does not involve random access may be performed. In the RACH-less handover, the RRC reconfiguration complete message is transmitted to the base station device 200 on the target serving cell without performing random access, and the handover is successful at the time when the MAC CE indicating the contention resolution is received from the base station device 200 on the target serving cell. That is, in the RACH-less handover, since the transmission of the RRC reconfiguration complete message is before the handover is successful, there is a possibility that the uplink data generated on the DRB is transmitted before the handover is successful.

### <Handover Failure Processing>

In a case where the handover is not successful within a certain period of time by the terminal device 100 that has received the RRC reconfiguration message including the reconfiguration-with-synchronization parameter, the handover is considered to have failed. A case where the handover is not successful within a certain period of time may correspond to a case where a handover failure detection timer, which is started upon reception of the RRC reconfiguration message including the reconfiguration-with-synchronization parameter, expires before the handover is successful.

In a case where the handover fails, the terminal device 100 reverts the configuration to the configuration used in the source PCell and performs the RRC connection reestablishment procedure. In a case of reverting to the configuration used in the source PCell, the values of state variables in each entity of each radio bearer are also reverted to the values used in the source (values immediately before the handover processing).

In the RRC connection reestablishment procedure, the terminal device 100 performs cell selection, and transmits the RRC reestablishment request message (RRCReestablishmentRequest) to the base station device 200 in a case where the NR cell is selected. The RRC reestablishment request message is transmitted through the SRB0. Since the PDCP entity is not present in the SRBO, security processing by the PDCP is not performed for the RRC reestablishment request message. In addition, when the RRC reestablishment message (RRCReestablishment) which is a response message to the RRC reestablishment request message is received from the base station device 200, the security key of the terminal device 100 is updated.

### <Conditional Handover>

The conditional handover (CHO) is a handover that is executed by the terminal device 100 (in a terminal-initiated manner) at the time when one or more handover execution conditions are satisfied. The terminal device 100 performs the configuration of the conditional handover by receiving the RRC reconfiguration message including the conditional reconfiguration parameter from the base station device 200. The conditional reconfiguration parameter includes one or more pairs of configuration parameters for a PCell change destination candidate, including the reconfiguration-with-synchronization parameter, and execution condition parameters for executing a handover to the PCell change destination candidate. The execution condition parameter includes, for example, a parameter related to measurement configuration. When the conditional reconfiguration parameter is received, the terminal device 100 starts measurement of the execution condition, and in a case where the measurement result of the PCell change destination candidate of any of the measured cells satisfies the execution condition, the terminal device 100 performs conditional handover to the PCell change destination candidate satisfying the condition.

Note that the conditional reconfiguration parameter can include one or a plurality of pairs of the SCG-side configuration, that is, the configuration parameter of the PSCell change destination candidate and the execution condition parameter for executing the change to the PSCell change destination candidate. The terminal device 100 starts measurement of the execution condition when the conditional reconfiguration parameter on the SCG side is received, and performs a conditional PSCell change (CPC) in a case where the measurement result satisfies the execution condition.

In the conditional handover, a handover failure is detected similarly to an unconditional handover (hereinafter, simply referred to as handover in some cases), and processing after the handover failure is performed. In the RRC connection reestablishment procedure after the conditional handover failure or the handover failure, in a case where the selected cell is the PCell change destination candidate, the terminal device 100 transmits the RRC reconfiguration complete message to attempt the handover instead of transmitting the RRC reestablishment request message to the base station device 200, and can recover the RRC connection. Note that in a case where the cell selected by the terminal device 100 is the PCell change destination candidate, the RRC reconfiguration complete message can be sent instead of sending the RRC reestablishment request message to the base station device 200 only in a case where a conditional reconfiguration attempt parameter (attemptCondReconfig), which is a parameter for permitting the processing, is configured in the terminal device 100.

### <AS Security and Key Stream>

The processing of the AS security is performed in the PDCP entity of the radio bearer other than the SRB0 by using the security key (encryption key, integrity protection key) generated by the RRC. The AS security processing includes encryption (ciphering) and integrity protection, which are executed using an encryption key and an integrity protection key, respectively.

When receiving the PDCP SDU from the upper layer, the PDCP entity of each radio bearer performs the AS security processing on the received PDCP SDU by using an input called a key stream. The key stream includes four elements, for example, KEY, COUNT, BEARER, and DIRECTION.

KEY indicates, for example, a security key.

COUNT is one of the state variables of the PDCP entity, and indicates, for example, a sequence number. A COUNT value has an initial value of '0' and is increased by 1 every time the PDCP PDU is passed to the lower layer. The maximum value of the COUNT value is, for example, a value obtained by subtracting 1 from 2 raised to the power of 32, that is, '4294967295'.

BEARER indicates, for example, a value of a radio bearer identifier. DIRECTION indicates uplink or downlink, and is '0' for uplink and '1' for downlink.

In the AS security, the key stream is prohibited from being reused (key stream reuse) from the viewpoint of security. For example, in the terminal device 100, in a case where data is transmitted from a certain radio bearer, unless the security key is updated, it is prohibited to perform the AS security processing using the COUNT value used in the past in this radio bearer.

Note that the definition of the term "key stream" may be somewhat different depending on the specification. In the present embodiment, the key stream will be described as four elements, KEY, COUNT, BEARER, and DIRECTION.

### [Embodiments]

Hereinafter, each embodiment will be described.

### <L1/L2 Triggered Mobility>

An overview of L1/L2 Triggered Mobility (LTM) which is currently under specification will be described.

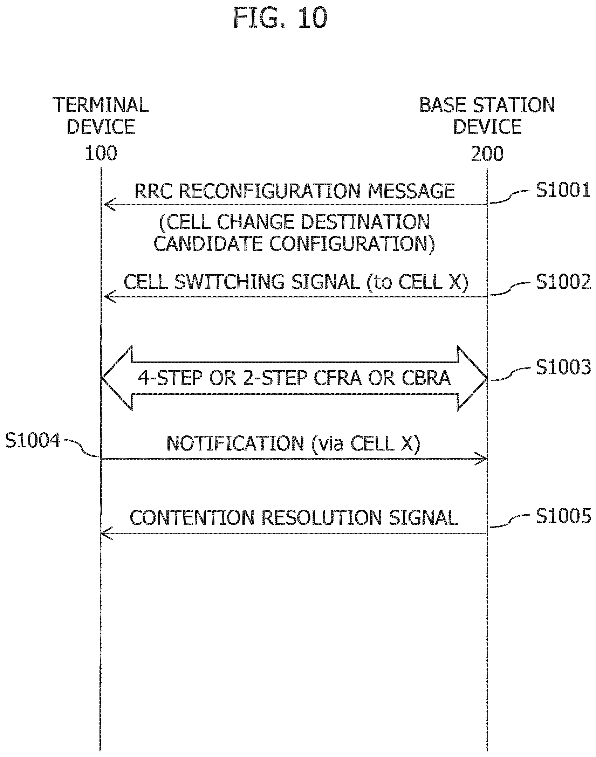

FIG. 10 is a diagram illustrating an example of a sequence of LTM.

The base station device 200 transmits an RRC reconfiguration message to the terminal device 100, the message including one or more configurations of cell change destination candidates (configurations of target cell candidates) (S1001).

When the RRC reconfiguration message is received (S1001), the terminal device 100 stores information (including the cell change destination candidates) included in the received message.

Note that the cell change destination candidate may be, for example, only the PCell or may include the SCell. The configuration of each cell change destination candidate may be able to be uniquely identified in the terminal device 100 using the index. In addition, the configuration of the cell change destination candidate does not include a parameter indicating update of the security key. That is, the security key used in the LTM is not updated. In addition, the configuration of the cell change destination candidate may include a parameter similar to the reconfiguration-with-synchronization parameter.

The base station device 200 transmits, to the terminal device 100, a cell switching signal for switching the serving cell of the terminal device 100 from the current serving cell to one of the cell change destination candidates (S1002).

The terminal device 100 receives the cell switching signal in the current serving cell (S1002). For example, MAC CE is used as the cell switching signal. In addition, a physical layer signal such as DCI may be used as the cell switching signal.

The cell switching signal includes at least an index. The terminal device 100 applies the configuration of the cell change destination candidate (referred to as cell X) designated by the received cell switching signal. Note that the cell X may include only the PCell, or may include the PCell and one or a plurality of SCells.

The terminal device 100 performs 4-step or 2-step CFRA or CBRA with the base station device 200 in the cell X according to the configuration of the cell X (S1003). In addition, in a case where the parameter indicating that the RACH-less cell switching is performed is included in the configuration of the cell X, the processing in step S1003 is not performed.

The terminal device 100 transmits a notification indicating that the cell is switched, to the base station device 200 in the cell X (S1004). The notification corresponds to the RRC reconfiguration complete message in the handover or the conditional handover. For the notification indicating that the cell is switched, the RRC message such as the RRC reconfiguration complete message may be used, or the MAC CE may be used. In addition, for the notification indicating that the cell is switched, a physical signal such as UCI may be used.

In addition, the notification indicating that the cell is switched may include at least an identifier in the cell X of the terminal device 100. Note that, in a case where two-step CFRA or CBRA is performed in step S1003, the notification indicating that the cell is switched is transmitted before receiving the random access response in step S1003. In addition, the uplink data generated in the DRB may be transmitted together with the notification indicating that the cell is switched.

In a case where the 4-step or 2-step CBRA is performed or in a case where the RACH-less cell switching is performed in step S1003, the base station device 200 transmits the contention resolution signal to the terminal device 100 (S1005).

For example, the terminal device 100 receives the contention resolution signal in the cell X (S1005). The contention resolution signal may include at least an identifier in the cell X of the terminal device 100.

The timing at which the cell switching is successful may be similar to the handover success in the handover or the conditional handover. That is, in the case of the cell switching using the four-step or two-step CFRA, the cell switching is successful at the time when the random access response is received. In addition, in the case of the cell switching using the four-step or two-step CBRA or the RACH-less cell switching, the cell switching is successful at the time when the contention resolution is performed. In a case where the timing at which the cell switching is successful is similar to the handover success in the handover or the conditional handover, similarly to the handover in the handover or the conditional handover, in the cell switching using the four-step CFRA, a notification indicating that the cell is switched or uplink data generated in the DRB is not transmitted before the cell switching is successful. However, in the case of the cell switching using the four-step CBRA, the cell switching using the two-step CFRA or CBRA, and the RACH-less cell switching, the notification indicating that the cell is switched may be transmitted before the cell switching is successful, and the uplink data generated in the DRB may be transmitted together with the notification.

Note that the cell switching may be paraphrased as LTM. In addition, the cell switching may be paraphrased as another term indicating cell switching by LTM. Hereinafter, the cell switching and the cell change may be treated as terms meaning the same thing.

### <Cell Switching Failure Processing>

In a case where the cell switching fails, the RRC connection reestablishment procedure may be performed similarly to certain handover failure processing or conditional handover failure processing.

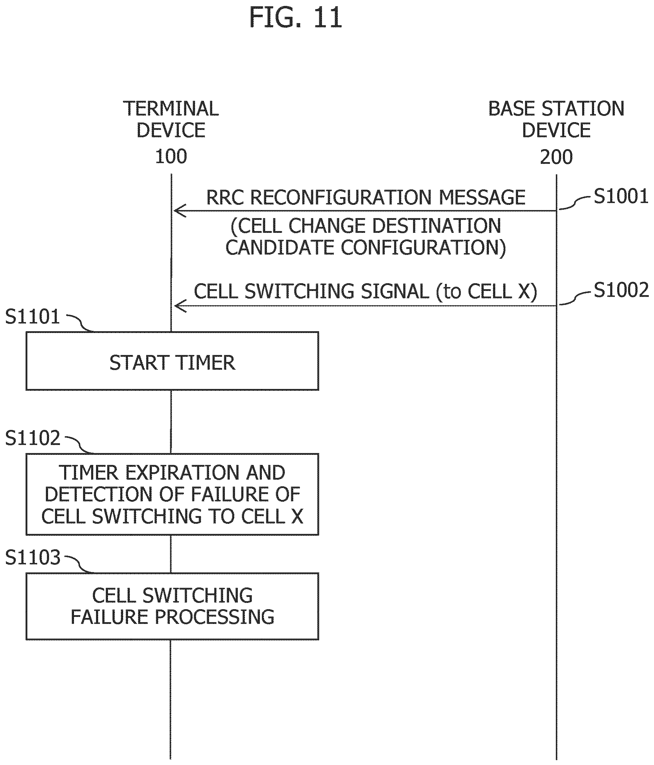

FIG. 11 is a diagram illustrating an example of a sequence of cell switching failure detection and cell switching failure processing. The processing of step S1001 and step S1002 in FIG. 11 is similar to the processing of step 1001 and step 1002 in FIG. 10.

When the cell switching signal is received (S1002), the terminal device 100 starts a timer for detecting a cell switching failure (S1101), and starts cell switching processing to a cell (referred to as a cell X) designated by the received cell switching signal (not illustrated).

In a case where the cell switching is successful before the timer expires, the terminal device 100 stops the timer (not illustrated). On the other hand, in a case where the timer expires, the terminal device 100 detects a failure of the cell switching to the cell X (S1102).

When the cell switching failure is detected (S1102), the terminal device 100 performs cell switching failure processing (S1103). In the cell switching failure processing, the terminal device 100 may revert to the configuration used in the source PCell and perform the RRC connection reestablishment procedure.

### <Key Stream Reuse Problem in Cell Switching Failure Processing>

In the LTM, in the RRC connection reestablishment procedure in the cell switching failure processing, it has been proposed that, in a case where the selected cell is one of the cell change destination candidates, the RRC connection is recovered in the same manner as in the case of conditional handover, that is, the cell switching to the selected cell is performed instead of transmitting the RRC reestablishment request message in the selected cell (for example, Non-Patent Literature 9 and Non-Patent Literature 10).

However, in a case where the selected cell is one of the cell change destination candidates in the RRC connection reestablishment procedure after the failure of the cell switching using the four-step CBRA, the failure of the cell switching using the two-step CFRA or CBRA, or the failure of the RACH-less cell switching, the processing of cell switching to the selected cell instead of transmitting the RRC reestablishment request message in the selected cell may cause a key stream reuse problem.

As described above, in the cell switching using the four-step CBRA, the cell switching using the two-step CFRA or CBRA, and the RACH-less cell switching, the uplink data may be transmitted together with the notification indicating that the cell is switched, before the cell switching is successful. In a case where the notification indicating that the cell is switched is an RRC message transmitted from an SRB (for example, SRB1) other than the SRBO, the RRC message is subjected to processing including security processing, in the PDCP entity of SRB1, and is transmitted as the PDCP data PDU via the lower layer. It is assumed that the COUNT value used for the security processing in the PDCP entity of the RRC message is, for example, n.

In addition, in a case where the uplink data is transmitted from a certain DRB (referred to as a DRB1) together with the notification indicating that the cell is switched, the uplink data is subjected to processing including security processing, in the PDCP entity of the DRB1, and is transmitted as the PDCP data PDU via the lower layer. It is assumed that the COUNT value used for the security processing (in the PDCP entity of the uplink data) of the uplink data is, for example, m.

In a case where the cell switching fails, the terminal device 100 reverts the configuration to the configuration used in the source PCell and performs the RRC connection reestablishment procedure. In a case of reverting to the configuration used in the source PCell, the values of state variables in each entity of each radio bearer are also reverted to the values used in the source, and therefore, the COUNT value is reverted to the state prior to reception of the cell switching signal. In the RRC connection reestablishment procedure, in a case where the selected cell is one of the cell change destination candidates and cell switching is performed to the selected cell, the terminal device 100 transmits an RRC message which is a notification indicating that the cell is switched in the cell. When the RRC message is transmitted, n is used again as the COUNT value in the security processing in the PDCP entity of the SRB1. In addition, when the first uplink message is transmitted from the DRB1 in the cell, m is used again as the COUNT value in the security processing in the PDCP entity of the DRB1. In the cell switching in the LTM, the security key is not changed, and the same security key and the same COUNT value are used for the same direction (uplink) of the same radio bearer. That is, the key stream reuse problem may occur.

### <Cell Switching Failure Processing 1 of Avoiding Key Stream Reuse Problem >

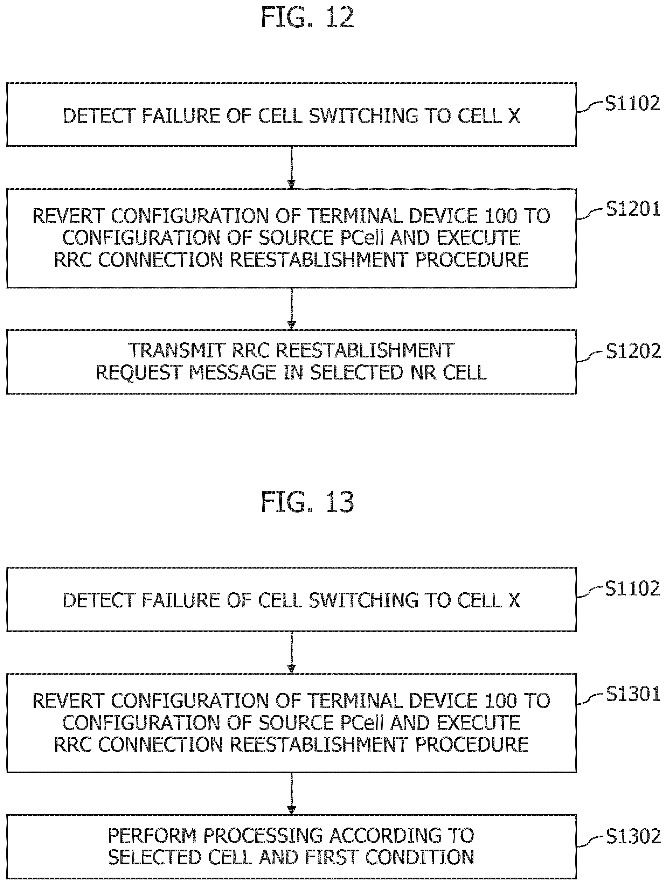

FIG. 12 is a diagram illustrating an example of a first cell switching failure processing method. The first cell switching failure processing method is a method of, in a case where the cell selected by the terminal device 100 is the NR cell in the RRC connection reestablishment procedure in the cell switching failure processing, transmitting the RRC reestablishment request message to the base station device 200 in the selected NR cell regardless of whether or not the NR cell is one of the cell change destination candidates.

The terminal device 100 detects a failure of the cell switching to the cell X (S1102).

Next, the terminal device 100 reverts the configuration to the configuration used in the source PCell and performs the RRC connection reestablishment procedure (S1201). In a case of reverting to the configuration used in the source PCell, the values of state variables in each entity of each radio bearer are also reverted to the values used in the source (values at the time of receiving the cell switching signal in step S1002 of FIG. 11 or values immediately before the reception). Note that the terminal device 100 may release the configuration of the stored cell change destination candidate when the RRC connection reestablishment procedure is performed. In a case where the configuration of the stored cell change destination candidate is released, the release processing may be performed before the processing of step S1202 described later.

In the RRC connection reestablishment procedure, the terminal device 100 performs cell selection and selects, for example, an NR cell. The terminal device 100 transmits the RRC reestablishment request message to the base station device 200 in the selected NR cell (S1202).

Note that in the RRC connection reestablishment procedure, in a case where the selected cell is a RAT other than NR, the terminal device 100 transitions to the RRC idle mode. In addition, in a case where a cell is not able to be selected within a certain period of time, the terminal device 100 transitions to the RRC idle mode.

### <Cell Switching Failure Processing 2 of Avoiding Key Stream Reuse Problem >

FIG. 13 is a diagram illustrating an example of a second cell switching failure processing method. The second cell switching failure processing method is a method of, in a case where the cell selected by the terminal device 100 is one of the cell change destination candidates and at least a first condition is satisfied in the RRC connection reestablishment procedure in the cell switching failure processing, applying the configuration of the cell change destination candidate of the selected cell and performing the cell switching processing to the selected cell. Note that in a case where the cell selected by the terminal device 100 is one of the cell change destination candidates and at least the first condition is satisfied, the processing of applying the configuration of the cell change destination candidate of the selected cell and performing the cell switching processing to the selected cell may be performed, for example, in a case where at least a first parameter is configured in the terminal device 100.

The terminal device 100 detects a failure of the cell switching to the cell X (S1102).

Next, the terminal device 100 reverts the configuration to the configuration used in the source PCell and performs the RRC connection reestablishment procedure (S1301). In a case of reverting to the configuration used in the source PCell, the terminal device 100 reverts the values of state variables in each entity of each radio bearer to the values used in the source (values at the time of receiving the cell switching signal in step S1002 of FIG. 11 or values immediately before the reception).

In the RRC connection reestablishment procedure, the terminal device 100 performs cell selection and performs processing according to the selected cell and the first condition (S1302).

The first condition is, for example, that in the cell switching processing to the cell X after the reception of the cell switching signal in step S1002 of FIG. 11, the cell switching processing by the four-step CFRA is performed, that is, the configuration of the cell change destination candidate for the cell X includes the four-step CFRA configuration.

In addition, the first condition is, for example, that in the cell switching processing to the cell X after the reception of the cell switching signal in step S1002 of FIG. 11, only the cell switching processing by the four-step CFRA is performed, that is, the configuration of the cell change destination candidate for the cell X includes the four-step CFRA configuration, and a reference signal having an RSRP equal to or greater than a threshold value is present at the time of the initial random access resource selection.

In addition, the first condition is, for example, that in the cell switching processing to the cell X after the reception of the cell switching signal in step S1002 of FIG. 11, the cell switching processing by the four-step CFRA is performed, that is, the configuration of the cell change destination candidate for the cell X includes the four-step CFRA configuration, and the selection is the first cell selection after the cell switching failure detection in step S1102.

In addition, the first condition is, for example, that in the cell switching processing to the cell X after the reception of the cell switching signal in step S1002 of FIG. 11, only the cell switching processing by the four-step CFRA is performed, that is, the configuration of the cell change destination candidate for the cell X includes the four-step CFRA configuration, a reference signal having an RSRP equal to or greater than a threshold value is present at the time of the initial random access resource selection, and the selection is the first cell selection after the cell switching failure detection in step S1102.

Note that the fact that only the cell switching processing by the four-step CFRA is performed may be paraphrased as that the cell switching processing by the four-step CFRA is performed and the MAC PDU of the message 3 (Msg3) buffer is not transmitted. In addition, the fact that only the cell switching processing by the four-step CFRA is performed may be paraphrased as words indicating that the four-step or two-step CBRA is not performed before the cell switching processing by the four-step CFRA.

Furthermore, the first condition may be, for example, that no PDCP data PDU is transmitted from the terminal device 100 via the lower layer between the reception of the cell switching signal in step S1002 and the detection of the cell switch failure in step S1102 of FIG. 11, that is, no RRC message is transmitted from the SRB other than the SRBO, and/or no uplink data is transmitted from a DRB.

Furthermore, the first condition may be, for example, that no PDCP data PDU is transmitted from the terminal device 100 via the lower layer between the reception of the cell switching signal in step S1002 and the detection of the cell switch failure in step S1102 of FIG. 11, that is, no RRC message is transmitted from the SRB other than the SRBO, and/or no uplink data is transmitted from a DRB, and the selection is the first cell selection after the cell switching failure detection in step S1102.

Furthermore, the first condition may be, for example, that only a first signal is transmitted from the terminal device 100 between the reception of the cell switching signal in step S1002 and the detection of the cell switching failure in step S1102 of FIG. 11.

Furthermore, the first condition may be, for example, that only a first signal is transmitted from the terminal device 100 between the reception of the cell switching signal in step S1002 and the detection of the cell switching failure in step S1102 of FIG. 11, and the selection is the first cell selection after the cell switching failure detection in step S1102.

The first signal is a notification transmitted in step S1004 of FIG. 10. The first signal may be, for example, a MAC CE. In addition, the first signal may be a signal of a physical layer.

In addition, transmitting only the first signal from the terminal device 100 may mean that no MAC SDU is transmitted from the terminal device 100.

In the RRC connection reestablishment procedure, the terminal device 100 performs cell selection. The terminal device 100 selects the NR cell, and in a case where the NR cell is one of the stored cell change destination candidates (for example, cell Y) and the first condition is satisfied, the terminal device 100 applies the configuration of the cell change destination candidate for the cell Y, and performs the cell switching processing to the cell Y. Note that the cell switching processing to the cell Y may be limited to a case where the first parameter is configured in the terminal device 100. The first parameter is, for example, a parameter indicating that in a case where the cell selected in the cell switching failure processing is one of the cell change destination candidates stored in the terminal device 100 and the first condition is satisfied, the cell switching processing is performed on this cell.

In addition, in the RRC connection reestablishment procedure, in a case where the selected cell is the NR cell and satisfies some or all of the following conditions A to C, the terminal device 100 transmits the RRC reestablishment request message to the base station device 200 in the selected cell. At this time, the terminal device 100 may release the configuration of the stored cell change destination candidate before transmitting the RRC reestablishment request message to the base station device 200.
Condition A: The selected cell is not one of the cell change destination candidates stored in the terminal device 100.
Condition B: The first condition is not satisfied.
Condition C: The first parameter is not configured.

In addition, in the RRC connection reestablishment procedure, in a case where the selected cell is a cell of the RAT other than the NR or in a case where the cell selection is not able to be performed within a predetermined time, the terminal device 100 transitions to the RRC idle mode.

Note that the terminal device 100 may be configured or designed so as not to transmit the PDCP data PDU (hereinafter, sometimes referred to as a transmission restriction configuration) between the reception of the cell switching signal in step S1002 and the detection of the cell switching failure in step S1102 of FIG. 11. The transmission restriction configuration is, for example, a configuration or design in which only four-step CFRA is used for the random access in the cell switching processing. In addition, the configuration or design in which only the four-step CFRA is used for the random access in the cell switching processing means that the configuration of each cell change destination candidate includes the four-step CFRA configuration.

In addition, the transmission restriction configuration is, for example, that the MAC CE or the physical layer signaling is used for the notification in step S1004 of FIG. 10, and, no uplink data generated in the DRB or the like is transmitted in step S1004. Not transmitting the uplink data generated in the DRB or the like means not transmitting the MAC SDU, for example.

In a case where the transmission restriction configuration is applied, the processing performed by the terminal device 100 in step S1302 is as follows.

In the RRC connection reestablishment procedure, the terminal device 100 performs cell selection. In a case where the selected cell is the NR cell and is one of the stored cell change destination candidates (for example, cell Y), the terminal device 100 applies the configuration of the cell change destination candidate for the cell Y, and performs the cell switching processing to the cell Y. Note that the cell switching processing to the cell Y may be limited to a case where a second parameter is configured in the terminal device 100.

The second parameter is, for example, a parameter indicating that in a case where the cell selected in the cell switching failure processing is one of the cell change destination candidates stored in the terminal device 100, the cell switching processing is performed on the cell.

In addition, the second parameter may be, for example, a parameter indicating that in a case where the cell selected in the cell switching failure processing is one of the cell change destination candidates stored in the terminal device 100 and the selection is the first cell selection after the cell switching failure detection in step S1102, the cell switching processing is performed on the cell.

In addition, in a case where the transmission restriction configuration is applied, in the RRC connection reestablishment procedure, in a case where the cell selected by the terminal device 100 is the NR cell and satisfies some or all of the following conditions D and E, the terminal device 100 transmits the RRC reestablishment request message to the base station device 200 in the selected cell. At this time, the terminal device 100 releases the configuration of the stored cell change destination candidate before transmitting the RRC reestablishment request message to the base station device 200.

Condition D: The selected cell is not one of the cell change destination candidates stored in the terminal device 100.

Condition E: The first parameter is not configured.

In addition, in the RRC connection reestablishment procedure, in a case where the selected cell is a cell of the RAT other than the NR or in a case where the cell selection is not able to be performed within a predetermined time, the terminal device 100 transitions to the RRC idle mode.

### <Cell Switching Failure Processing 3 of Avoiding Key Stream Reuse Problem >

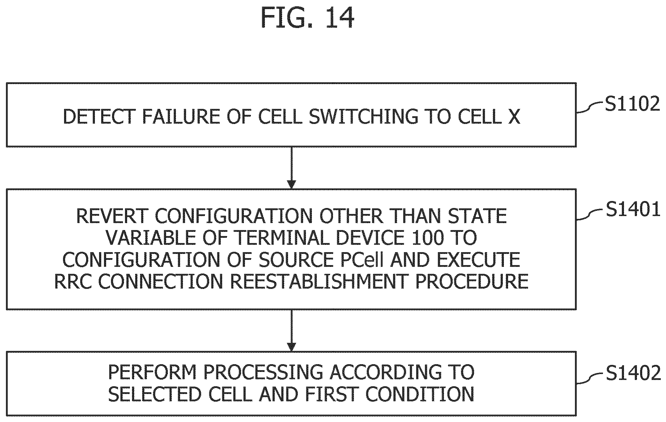

FIG. 14 is a diagram illustrating an example of a third cell switching failure processing method. The third cell switching failure processing method is processing in which, when the terminal device 100 reverts the configuration to the configuration of the source PCell after the detection of the cell switch failure, the values of some or all of the state variables are retained, and, in the RRC connection reestablishment procedure, in a case where the cell selected by the terminal device 100 is the NR cell and is one of the cell change destination candidates, the configuration of the cell change destination candidate of the selected cell is applied, and the cell switching processing to the selected cell is performed. Note that, when the terminal device 100 reverts the configuration to the configuration of the source PCell after the detection of the cell switch failure described above, the processing of retaining the values of some or all of the state variables is performed, for example, in a case where at least the second parameter is configured in the terminal device 100. In the RRC connection reestablishment procedure, in a case where the cell selected by the terminal device 100 is one of the cell change destination candidates, the processing of applying the configuration of the cell change destination candidate of the selected cell and performing the cell switching processing to the selected cell is performed, for example, in a case where at least the second parameter is configured in the terminal device 100. Note that in a case where the RRC reestablishment request message is transmitted to the base station device 200 in the selected cell, the terminal device 100 reverts the retained state variable to the configuration of the source PCell before transmitting the RRC reestablishment request message.

The terminal device 100 detects a failure of the cell switching to the cell X (S1102).

Next, the terminal device 100 reverts the configuration to the configuration used in the source PCell and performs the RRC connection reestablishment procedure (S1401). In a case of reverting to the configuration used in the source PCell, the values of some or all of the state variables in each entity of each radio bearer are retained without being reverted to the values used in the source PCell (values at the time of receiving the cell switching signal in step S1002 of FIG. 11 or values immediately before the reception). The retained state variable includes, for example, the COUNT value in the PDCP entity. In addition, when reverting to the configuration used in the source PCell, the processing of retaining the values of some or all of the state variables in each entity of each radio bearer is performed, for example, in a case where the second parameter is configured in the terminal device 100.

Next, in the RRC connection reestablishment procedure, the terminal device 100 performs cell selection and performs processing according to the selected cell and the first condition (step S1402).

In a case where the selected cell is the NR cell and is one of the stored cell change destination candidates (for example, cell Y), the terminal device 100 applies the configuration of the cell change destination candidate for the cell Y, and performs the cell switching processing to the cell Y. Note that the processing to the cell Y is performed, for example, in a case where the second parameter is configured in the terminal device 100.

The second parameter is, for example, a parameter indicating that in a case where the cell selected in the cell switching failure processing is one of the cell change destination candidates stored in the terminal device 100, the cell switching processing is performed on the cell.

In addition, the second parameter may be, for example, a parameter indicating that in a case where the cell selected in the cell switching failure processing is one of the cell change destination candidates stored in the terminal device 100 and the selection is the first cell selection after the cell switching failure detection in step S1102, the cell switching processing is performed on the cell.

Note that the values of some or all of the state variables in each entity of each radio bearer are, for example, the values of some or all of the state variables in each entity of each DRB.

In addition, in the RRC connection reestablishment procedure, in a case where the selected cell is the NR cell and satisfies some or all of the following conditions F and G, the terminal device 100 transmits the RRC reestablishment request message to the base station device 200 in the selected cell. At this time, the terminal device 100 releases the configuration of the stored cell change destination candidate before transmitting the RRC reestablishment request message to the base station device 200, for example. In addition, at this time, for example, the terminal device 100 may revert the values of the state variables retained in step S1401 to the values used in the source PCell (values at the time of receiving the cell switching signal in step S1002 of FIG. 11 or values immediately before the reception) before transmitting the RRC reestablishment request message to the base station device 200. The processing of reverting the values of the state variables retained in step S1401 to the values used in the source before transmitting the RRC reestablishment request message to the base station device 200 is performed, for example, in a case where the second parameter is configured.

Condition F: The selected cell is not one of the cell change destination candidates stored in the terminal device 100.

Condition G: The second parameter is not configured.

In addition, in the RRC connection reestablishment procedure, in a case where the selected cell is a cell of the RAT other than the NR or in a case where the cell selection is not able to be performed within a predetermined time, the terminal device 100 transitions to the RRC idle mode.

As a result, the terminal device 100 and the base station device 200 can avoid the key stream reuse problem and perform secure communication in the cell switching failure processing of the terminal device 100.

Note that in the cell switching failure processing, the fact that the selected cell is one of the cell change destination candidates stored in the terminal device 100 means, for example, that the selected cell is one of the PCells of the cell change destination candidates stored in the terminal device 100. In addition, the fact that the selected cell is one of the cell change destination candidates stored in the terminal device 100 may mean, for example, that the selected cell is one of the PCells included in the configuration of the cell change destination candidate received in step S1001 of FIG. 11.

### <Others>

In some cases, some of the messages on the sequence described above are not performed in order or the order is partially changed. In addition, the message on the sequence is not partially performed in some cases.

In addition, what is described as the functions and processing of the terminal device 100 may be the functions and processing of the base station device 200. In addition, what is described as the functions and processing of the base station device 200 may be the functions and processing of the terminal device 100.

In addition, in a case where the term "radio bearer" is simply used without distinguishing between the signaling radio bearer and the data radio bearer, the radio bearer may be a signaling radio bearer, may be a data radio bearer, or may be both a signaling radio bearer and a data radio bearer.

In addition, the expressions "A may be paraphrased as B" is intended to encompass both paraphrasing A as B and paraphrasing B as A.

In addition, in a case where the condition "B" is contrary to the condition "A", the condition "B" may be expressed as "other" conditions relative to the condition "A".

In summary, the following is obtained.
(1)A terminal device comprising:
   a receptor that receives, from a base station device, a first signal including change destination information that designates first cell and second cell as cell change destination candidates; and
   a switcher that performs first processing of switching a serving cell from a third cell to the first cell according to information related to a cell change included in a second signal received from the base station device, and performs, in a case where the first processing fails, second processing of executing a reestablishment procedure by using a third configuration applied in the third cell,
   wherein in the second processing, in a case where the second cell is selected as a change destination, the switcher switches the serving cell to the second cell by using a second configuration applied in the second cell instead of the third configuration.
(2) The terminal device according to (1),
   wherein in the second processing, in a case where the second cell is selected as the change destination and a first condition is satisfied, the switcher switches the serving cell to the second cell by applying the second configuration.
(3) The terminal device according to (2),
   wherein the first condition is that a first configuration applied to the first cell includes a parameter indicating that four-step contention free random access is performed during cell switching.
(4) The terminal device according to (2),
   wherein the first condition is that a PDCP data PDU is not transmitted when the terminal device performs the first processing.
(5) The terminal device according to (1),
   wherein the second processing includes processing of maintaining a value of a state variable at a value of a first state variable and executing the reestablishment procedure by using the third configuration, and
   in the reestablishment procedure, in a case where a fourth cell, which is not included in the cell change destination candidates, is selected, the switcher changes the value of the state variable to a value of a second state variable, which is the value of the state variable prior to the value of the first state variable, and performs control to transmit a reestablishment request to the base station device.
(6) The terminal device according to (5),
   wherein the value of the state variable includes a sequence number managed for each radio bearer.
(7) A base station device comprising:
   a transmitter that transmits, to a terminal device, a first signal including change destination information that designates first cell and second cell as cell change destination candidates; and
   a controller that transmits a second signal including information related to a cell change, and causes the terminal device to perform first processing of switching a serving cell from a third cell to the first cell according to the information related to the cell change and to perform, in a case where the first processing fails, second processing of executing a reestablishment procedure by using a third configuration applied in the third cell,
   wherein in the second processing, in a case where the terminal device selects the second cell as a change destination, the controller performs control to switch the serving cell to the second cell by using a second configuration applied in the second cell instead of the third configuration.
(8) The base station device according to claim 7,
   wherein in a case where the terminal device selects the second cell and the first condition is satisfied, the controller performs processing of switching the serving cell to the second cell by applying the second configuration.
(9) The base station device according to (8),
   wherein the first condition is that a first configuration applied to the first cell includes a parameter indicating that four-step contention free random access is performed during cell switching.
(10) The base station device according to (8),
   wherein the first condition is that a PDCP data PDU is not transmitted when the terminal device performs the first processing.
(11) The base station device according to (7),
   wherein the second processing includes processing of causing the terminal device to maintain a value of a state variable at a value of a first state variable and to execute the reestablishment procedure by using the third configuration, and
   in the reestablishment procedure, in a case where the terminal device selects a fourth cell which is not included in the cell change destination candidates, the controller controls to cause the terminal device to change the value of the state variable to a value of a second state variable, which is the value of the state variable prior to the value of the first state variable, and to transmit a reestablishment request.
(12) The base station device according to (11),
   wherein the value of the state variable includes a sequence number managed for each radio bearer.
(13) A wireless communication system comprising:
   a base station device that transmits, to a terminal device, a first signal including change destination information that designates first cell and second cell as cell change destination candidates; and
   a terminal device that
   performs first processing of switching a serving cell from a third cell to the first cell according to information related to a cell change included in a second signal received from the base station device,
   performs, in a case where the first processing fails, second processing of executing a reestablishment procedure by using a third configuration applied in the third cell, and
   switches, in the second processing, in a case where the second cell is selected as a change destination, the serving cell to the second cell by using a second configuration applied in the second cell instead of the third configuration.

Note that, although an example of the device has been described in each embodiment, the method of the present disclosure is not limited to cellular phones, smartphones, tablet terminals, base station devices, and the like, and may also be applied to other electronic devices, such as electronic devices mounted on automobiles, trains, airplanes, artificial satellites, and the like; electronic devices mounted on drones; robots; AV equipment; home appliances; office equipment; vending machines; other daily-use devices; and industrial equipment.

In addition, in each embodiment, E-UTRA and NR have been described as radio access technologies, and EPC and 5GC have been described as core networks; however, the method of the present disclosure is not limited to these. For example, the form of the present disclosure may be applied to radio access technologies or networks of different generations such as 6th generation or 7th generation.

In addition, the present invention is not limited to the above embodiments, and various modifications can be made.

In addition, although the embodiments have been described in detail with reference to the drawings, the specific configurations are not limited to those illustrated in the drawings and described in the embodiments.

### REFERENCE SIGNS LIST

- 10: : COMMUNICATION SYSTEM

- 100: : TERMINAL DEVICE
- 110: : CPU
- 120: : STORAGE
- 121: : STORES A TERMINAL-SIDE WIRELESS COMMUNICATION PROGRAM
- 122: : TERMINAL-SIDE PROGRAM
- 130: : MEMORY
- 140: : WIRELESS COMMUNICATION CIRCUIT
- 200: : BASE STATION DEVICE
- 210: : CPU
- 220: : STORAGE
- 221: : WIRELESS COMMUNICATION PROGRAM
- 222: : BASE STATION-SIDE PROGRAM
- 230: : MEMORY
- 240: : WIRELESS COMMUNICATION CIRCUIT
- 250: : NETWORK INTERFACE
- 300: : CORE NETWORK 10

## Claims

1. A terminal device comprising:
a reception unit that receives, from a base station device, a first signal including change destination information that designates first and second cells as cell change destination candidates; and
a switching unit that performs first processing of switching a serving cell from a third cell to the first cell according to information related to a cell change included in a second signal received from the base station device, and performs, in a case where the first processing fails, second processing of executing a reestablishment procedure by using a third configuration applied in the third cell,
wherein in the second processing, in a case where the second cell is selected as a change destination, the switching unit switches the serving cell to the second cell by using a second configuration applied in the second cell instead of the third configuration.

2. The terminal device according to claim 1,
wherein in the second processing, in a case where the second cell is selected as the change destination and a first condition is satisfied, the switching unit switches the serving cell to the second cell by applying the second configuration.

3. The terminal device according to claim 2,
wherein the first condition is that a first configuration applied to the first cell includes a parameter indicating that four-step contention free random access is performed during cell switching.

4. The terminal device according to claim 2,
wherein the first condition is that a PDCP data PDU is not transmitted when the terminal device performs the first processing.

5. The terminal device according to claim 1,
wherein the second processing includes processing of maintaining a value of a state variable at a value of a first state variable and executing the reestablishment procedure by using the third configuration, and
in the reestablishment procedure, in a case where a fourth cell, which is not included in the cell change destination candidates, is selected, the switching unit changes the value of the state variable to a value of a second state variable, which is the value of the state variable prior to the value of the first state variable, and performs control to transmit a reestablishment request to the base station device.

6. The terminal device according to claim 5,
wherein the value of the state variable includes a sequence number managed for each radio bearer.

7. A base station device comprising:
a transmission unit that transmits, to a terminal device, a first signal including change destination information that designates first and second cells as cell change destination candidates; and
a control unit that transmits a second signal including information related to a cell change, and causes the terminal device to perform first processing of switching a serving cell from a third cell to the first cell according to the information related to the cell change and to perform, in a case where the first processing fails, second processing of executing a reestablishment procedure by using a third configuration applied in the third cell,
wherein in the second processing, in a case where the terminal device selects the second cell as a change destination, the control unit performs control to switch the serving cell to the second cell by using a second configuration applied in the second cell instead of the third configuration.

8. The base station device according to claim 7,
wherein in a case where the terminal device selects the second cell and the first condition is satisfied, the control unit performs processing of switching the serving cell to the second cell by applying the second configuration.

9. The base station device according to claim 8,
wherein the first condition is that a first configuration applied to the first cell includes a parameter indicating that four-step contention free random access is performed during cell switching.

10. The base station device according to claim 8,
wherein the first condition is that a PDCP data PDU is not transmitted when the terminal device performs the first processing.

11. The base station device according to claim 7,
wherein the second processing includes processing of causing the terminal device to maintain a value of a state variable at a value of a first state variable and to execute the reestablishment procedure by using the third configuration, and
in the reestablishment procedure, in a case where the terminal device selects a fourth cell which is not included in the cell change destination candidates, the control unit controls to cause the terminal device to change the value of the state variable to a value of a second state variable, which is the value of the state variable prior to the value of the first state variable, and to transmit a reestablishment request.

12. The base station device according to claim 11,
wherein the value of the state variable includes a sequence number managed for each radio bearer.

13. A wireless communication system comprising:
a base station device that transmits, to a terminal device, a first signal including change destination information that designates first and second cells as cell change destination candidates; and
a terminal device that
performs first processing of switching a serving cell from a third cell to the first cell according to information related to a cell change included in a second signal received from the base station device,
performs, in a case where the first processing fails, second processing of executing a reestablishment procedure by using a third configuration applied in the third cell, and
switches, in the second processing, in a case where the second cell is selected as a change destination, the serving cell to the second cell by using a second configuration applied in the second cell instead of the third configuration.
